# EUROPEAN PATENT APPLICATION

(11) **EP 2 608 048 A1**
(43) Date of publication of application: **26.06.2013**
(21) Application number: 12169720.5
(22) Date of filing: 29.05.2012
(51) Int. Cl.: G06F 13/40, G06F 13/42

(54) **Apparatus, system, and method for analyzing and managing data flow of interface apparatuses**

(30) Priority: 20.12.2011 US 201161577676 P; 09.02.2012 TW 101104257
(71) Applicant: Acer Incorporated, New Taipei City 221 (TW)
(72) Inventor: Yeung, Sip Kim, New Taipei City 221 (TW)
(74) Representative: Becker Kurig Straus

(57) **Abstract**

An apparatus, a system, and a method for analyzing and managing data flow of interface apparatuses are provided. The system includes a host and the interface apparatuses. In the host, a first controller provides data of a first channel and a second channel through a first interface port. Each interface apparatus has a second interface port, a second controller, a switch, and a third interface port. The second interface port serially connected to the first interface port receives data of the two channels and divides the same to be transmitted on a first transmission path and a second transmission path. The second controller processes data transmitted on the first transmission path. The switch switches data transmitted on the two transmission paths according to a control signal issued by the first controller. The third interface port is connected to the switch for outputting the switched data of the two channels.

## Description

### CROSS-REFERENCE TO RELATED APPLICATION

This application claims the priority benefits of U.S. provisional application serial no. 61577676, filed on December 20, 2011 and Taiwan application serial no. 101104257, filed on February 9, 2012. The entirety of each of the above-mentioned patent applications is hereby incorporated by reference herein and made a part of this specification.

### BACKGROUND OF THE INVENTION

### 1. Field of the Invention

The invention generally relates to an apparatus, a system, and a method for managing interface apparatuses, and more particularly, to an apparatus, a system, and a method for analyzing and managing data flow of thunderbolt interface apparatuses.

### 2. Description of Related Art

Along with the rapid advancement of technologies, computer functionality has been expanded and different peripheral equipments have been developed. In order to let a user to improve the performance or expand the functionality of a computer conveniently, an accelerated graphics port (AGP) slot, a peripheral component interconnect (PCI) slot, a PCI express (PCI-E) slot, and other slots are usually configured on the motherboard of the computer such that the user can insert a video card, an audio card, a network card, and other expansion cards. In addition, firewire, universal serial bus (USB), and other expansion interfaces may also be configured on the motherboard of a computer to allow the user to connect a hard disk, a printer, and other external devices.

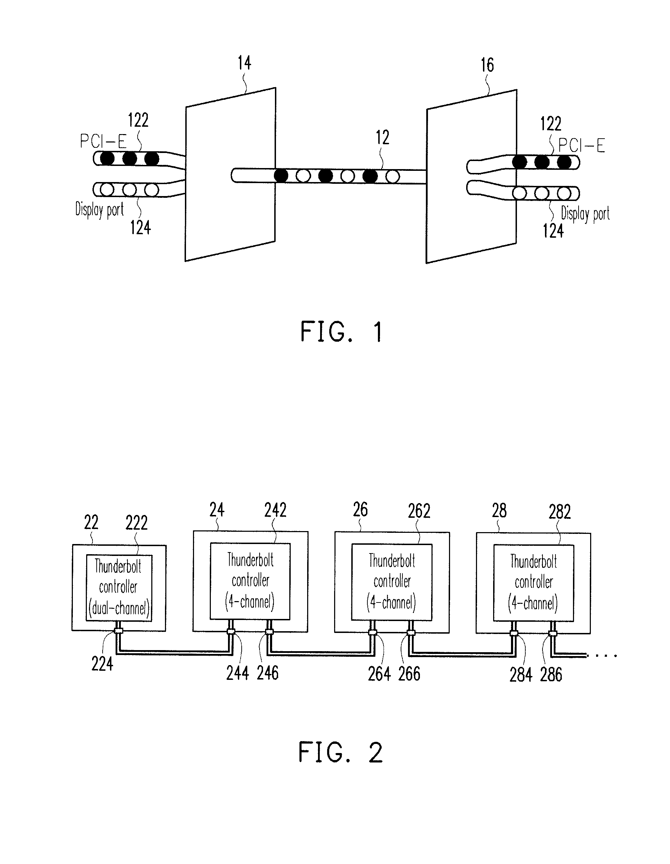

Recently, a new thunderbolt interface is developed by Intel Corporation, in which the PCI-E technique and the DisplayPort technique are integrated so that data and image streams can be transmitted in a single cable at the same time. FIG. 1 is a data transmission diagram of a thunderbolt interface according to an embodiment of the invention. Referring to FIG. 1, in the same cable 12, two channels 122 and 124 are provided as a PCI-E slot and a display port for respectively transmitting data and image streams. Through the control of the thunderbolt controllers 14 and 16 disposed at both ends of the cable 12, each channel can transmit over ten gigabits (GB) data per second in each direction. Thus, data can be transmitted between a computer and its peripheral equipments in a high speed. The bandwidth provided by the thunderbolt transmission technique allows many high-speed apparatuses to be serially connected in a daisy-chain manner without any hub or switch.

FIG. 2 illustrates a conventional serial daisy-chain architecture of thunderbolt interfaces. Referring to FIG. 2, in order to realize the serial daisy-chain connection, a thunderbolt interface port 222 and a thunderbolt controller 224 supporting dual-channel transmission are disposed in the host 22 (i.e., the main control end), at least two thunderbolt interface ports (the thunderbolt interface ports 242, 244, 262, 264, 282, and 284) are respectively disposed in each of the thunderbolt interface apparatuses 24, 26, and 28 that are serially connected after the host 22. Because each thunderbolt interface has two channels, thunderbolt controllers 246, 266, and 286 supporting 4 channels are further respectively disposed in the thunderbolt interface apparatuses 24, 26, and 28. As a result, the hardware cost of each thunderbolt interface apparatus is increased.

The two channels of an existing thunderbolt interface are only used for respectively transmitting data and image streams and do not support channel aggregation. Thus, the transmission performance of these channels is limited. If the thunderbolt apparatuses serially connected by a user does not have any display-related device, the channel for transmitting image streams idles. Accordingly, the high-cost thunderbolt interface port and thunderbolt controller only perform at half of their capabilities and system resources are wasted. In addition, the daisy-chain serial architecture does not support fault tolerance. Once any failure or malfunction occurs on a specific thunderbolt apparatus, those thunderbolt apparatuses serially connected after the specific thunderbolt apparatus will lose their connections and stop working, and data loss may even be caused.

### SUMMARY OF THE INVENTION

Accordingly, the invention is directed to an apparatus, a system, and a method for analyzing and managing data flow of interface apparatuses, in which a data flow of two channels in a thunderbolt interface is balanced according to the characteristics of serially connected interface apparatuses.

The invention provides a system for analyzing and managing data flow of interface apparatuses and the system includes a host and a plurality of interface apparatuses. The host has a first controller and a first interface port. The first controller provides data of a first channel and a second channel through the first interface port. Each of the interface apparatuses includes a second controller, a switch, a second interface port, and a third interface port. The second interface port is serially connected to the first interface port for receiving data of the first channel and the second channel and dividing the data of the first channel and the second channel to be transmitted on a first transmission path and a second transmission path. The second controller is disposed on the first transmission path for processing data transmitted on the first transmission path. The switch is respectively connected to the first transmission path and the second transmission path for switching data of the first channel and the second channel transmitted on the first transmission path and the second transmission path according to a control signal issued by the first controller. The third interface port is connected to the switch for outputting the switched data of the first channel and the second channel.

According to an embodiment of the invention, each of the interface apparatuses further includes a third controller. The third controller is disposed on the second transmission path for processing data transmitted on the second transmission path.

According to an embodiment of the invention, each of the interface apparatuses is further serially connected to the second interface port of another interface apparatus, so as to output the switched data of the first channel and the second channel to the another interface apparatus through the third interface port.

According to an embodiment of the invention, the first controller includes a detection module, an analysis module, and a management module. The detection module detects interface apparatuses serially connected after the first interface port and obtains the apparatus information of each of the interface apparatuses. The analysis module analyzes the apparatus information of each of the interface apparatuses and determines a transmission path of the data of the first channel and the second channel in the interface apparatus by using a data flow management strategy. The management module transmits a control signal to each of the interface apparatuses according to the determined transmission path, so as to control the switch to switch the data of the first channel and the second channel on the first transmission path and the second transmission path.

The invention provides a method for analyzing and managing data flow of interface apparatuses, adapted to a host and a plurality of interface apparatuses serially connected in a daisy-chain manner. The host provides data of a first channel and a second channel and switches transmission paths of the data of the first channel and the second channel in the interface apparatuses. In the present method, the serially connected interface apparatuses are detected, and apparatus information of each of the interface apparatuses is obtained. Then, the apparatus information of each of the interface apparatuses is analyzed, and a transmission path of the data of the first channel and the second channel in the interface apparatus is determined by using a data flow management strategy. Finally, a control signal is transmitted to each of the interface apparatuses according to the determined transmission path, so as to control the switch in each of the interface apparatuses to switch the transmission path of the data of the first channel and the second channel.

The invention provides an apparatus for analyzing and managing data flow of interface apparatuses including an interface port and a controller. The interface port is configured for serially connecting a plurality of interface apparatuses. The controller provides data of a first channel and a second channel. The controller includes a detection module, an analysis module, and a management module. The detection module detects the serially connected interface apparatuses and obtains apparatus information of each of the interface apparatuses. The analysis module analyzes the apparatus information of each of the interface apparatuses and determines the transmission path of the data of the first channel and the second channel in the interface apparatus by using a data flow management strategy. The management module transmits a control signal to each of the interface apparatuses according to the determined transmission path, so as to control the switch to switch the transmission path of the data of the first channel and the second channel.

According to an embodiment of the invention, the data flow management strategy includes a load balancing strategy, a fault tolerance strategy, or a data flow optimization strategy regarding a specific interface apparatus.

According to an embodiment of the invention, the apparatus information includes a bandwidth requirement, a data backup requirement, and a data processing sequence of each of the interface apparatuses.

According to an embodiment of the invention, the controller, the first controller, the second controller, and the third controller are thunderbolt controllers supporting dual-channel data transmission.

According to an embodiment of the invention, each of the interface apparatuses includes a graphic processing apparatus, a display apparatus, an audio apparatus, a storage apparatus, a network connection apparatus, or a burning apparatus adopting a thunderbolt interface for transmitting data.

As described above, the invention provides an apparatus, a system, and a method for analyzing and managing data flow of interface apparatuses, in which data of two channels entering interface apparatuses is divided to be transmitted on two transmission paths, and the transmission paths are switched by using switches in the interface apparatuses, so that a host can dynamically balance the data flow of the two channels on the two transmission paths according to the characteristics of the serially connected interface apparatuses and support a fault tolerance function.

These and other exemplary embodiments, features, aspects, and advantages of the invention will be described and become more apparent from the detailed description of exemplary embodiments when read in conjunction with accompanying drawings.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a data transmission diagram of a thunderbolt interface according to an embodiment of the invention.

FIG. 2 illustrates a conventional serial daisy-chain architecture of thunderbolt interfaces.

FIG. 3(a) and FIG. 3(b) are respectively a block diagram of an interface apparatus according to an embodiment of the invention.

FIG. 4 is a diagram of a switch according to an embodiment of the invention.

FIG. 5 is a block diagram of a system for analyzing and managing data flow of interface apparatuses according to an embodiment of the invention.

FIG. 6 is a block diagram of an apparatus for analyzing and managing data flow of interface apparatuses according to an embodiment of the invention.

FIG. 7 is a flowchart of a method for analyzing and managing data flow of interface apparatuses according to an embodiment of the invention.

FIG. 8 illustrates an example of a system for analyzing and managing data flow of interface apparatuses according to an embodiment of the invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

In the invention, based on the large transmission bandwidth and the serial daisy-chain connection characteristic of thunderbolt interface, both data transmission channels of a thunderbolt interface are used for transmitting data. Besides, the transmission path of the data in the two data transmission channels is dynamically switched in interface apparatuses serially connected through thunderbolt interfaces according to the characteristics of interface apparatuses, so as to balance the load of the data flow and achieve a fault tolerance function.

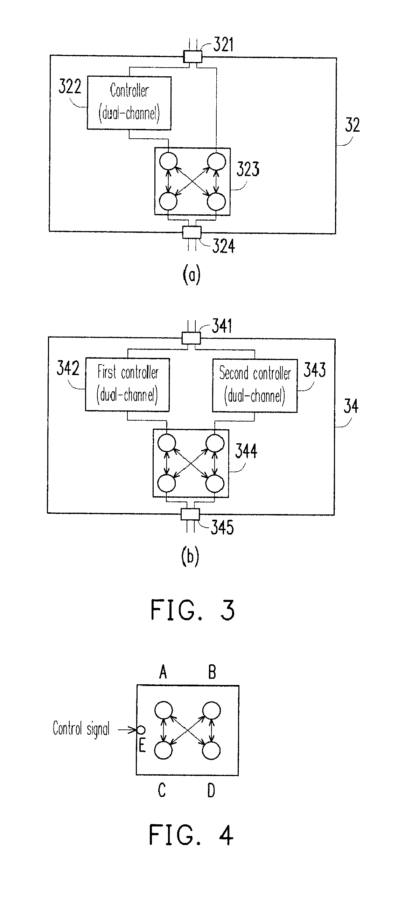

FIG. 3(a) and FIG. 3(b) are respectively a block diagram of an interface apparatus according to an embodiment of the invention. Referring to FIG. 3(a), the interface apparatus 32 in the present embodiment may be a graphic processing apparatus (including graphic processing unit (GPU)), a display apparatus, an audio apparatus, a storage apparatus, a network connection apparatus, a burning apparatus, or any other peripheral apparatus adopting a thunderbolt interface for transmitting data. The interface apparatus 32 includes a first interface port 321, a controller 322, a switch 323, and a second interface port 324. The functions of these components will be respectively explained below.

The first interface port 321 is serially connected to a host (not shown) or the output interface port of another interface apparatus (not shown). The first interface port 321 receives data of the first channel and the second channel and divides the data of the first channel and the second channel to be transmitted on a first transmission path and a second transmission path. Herein the first channel and the second channel may be two data transmission channels of the thunderbolt interface.

The controller 322 is disposed on the first transmission path for processing data transmitted on the first transmission path. The controller 322 is further connected to the main body of the interface apparatus 32 so that the main body can receive and process data of the first channel through the first transmission path. The main body refers to the hardware part of aforementioned graphic processing apparatus, display apparatus, audio apparatus, storage apparatus, network connection apparatus, or burning apparatus.

The switch 323 is respectively connected to the first transmission path and the second transmission path. The switch 323 can switch the data of the first channel and the second channel transmitted on the first transmission path and the second transmission path according to a control signal received from the host. Herein the control signal may be captured by the controller 322 on the first transmission path and input to the control terminal of the switch 323 so as to control the switch 323 to switch the data transmitted on the transmission paths.

FIG. 4 is a diagram of a switch according to an embodiment of the invention. Referring to FIG. 4, the switch 40 in the present embodiment may be any common high-speed switch in the router market. The switch 40 includes a control contact E and 4 data contacts A, B, C, and D. The data contacts A and B are respectively connected to the first transmission path and the second transmission path. In the standard switching mode of the switch 40, when the control signal received by the control contact E is logic 0, the contact A is connected to the contact C and the contact B is connected to the contact D, which means the data of the first channel and the second channel transmitted on the first transmission path and the second transmission path remains unchanged. When the control signal received by the control contact E is logic 1, the contact A is connected to the contact D and the contact B is connected to the contact C, which means the data of the first channel and the second channel transmitted on the first transmission path and the second transmission path has been switched by the switch 40.

The second interface port 324 is connected to the switch 323 for outputting the data of the first channel and the second channel switched by the switch 323. The second interface port 324 is further serially connected to the first interface port of another interface apparatus (not shown) so that the interface apparatus 32 can output the data of the first channel and the second channel switched by the switch 323 to the other interface apparatus through the second interface port 324.

Only one controller 322 supporting dual-channel data transmission of thunderbolt interface is disposed in the interface apparatus 32 to process data of one channel received by the first interface port 321 and data of the other channel is provided to another interface apparatus serially connected thereafter by bypassing the interface apparatus 32. Thereby, both channels are effectively utilized for transmitting data and a fault tolerance function is achieved.

Referring to FIG. 3(b), the interface apparatus 34 is also a graphic processing apparatus, a display apparatus, an audio apparatus, a storage apparatus, a network connection apparatus, a burning apparatus, or any other peripheral apparatus adopting a thunderbolt interface for transmitting data. The interface apparatus 34 includes a first interface port 341, a first controller 342, a second controller 343, a switch 344, and a second interface port 345. The functions of the first interface port 341, the first controller 342, the switch 344, and the second interface port 345 are the same as or similar to those of the first interface port 321, the first controller 322, the switch 323, and the second interface port 324 in the interface apparatus 32 therefore will not be described in detail herein.

Unlike the interface apparatus 32, the interface apparatus 34 further includes a second controller 343 disposed on the second transmission path for processing data transmitted on the second transmission path. The second controller 343 further includes a main body connected to the interface apparatus 34, and the main body receives and processes data of the second channel through the second transmission path. The main body is the hardware part of aforementioned graphic processing apparatus, display apparatus, audio apparatus, storage apparatus, network connection apparatus, or burning apparatus.

With the architecture described above, two main bodies with different functions can be disposed in the same interface apparatus, and data of the first channel and the second channel transmitted on the first transmission path and the second transmission path can be switched by the switch 40.

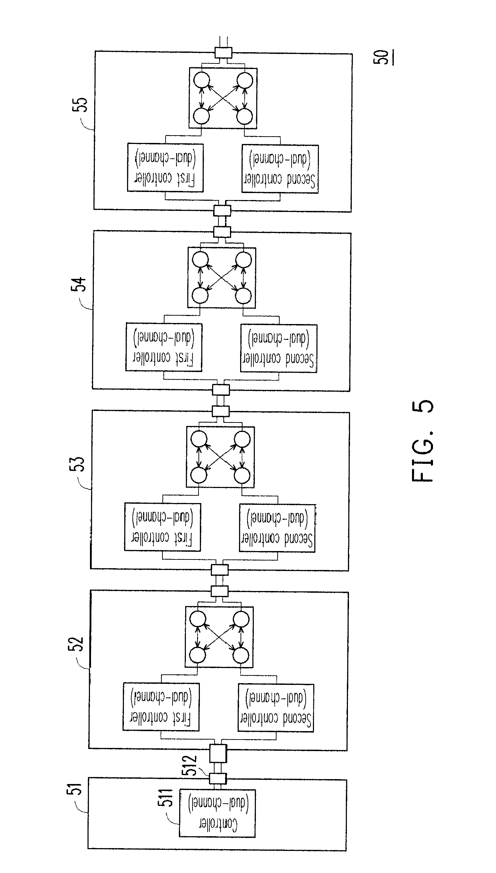

FIG. 5 is a block diagram of a system for analyzing and managing data flow of interface apparatuses according to an embodiment of the invention. Referring to FIG. 5, the data flow analysis and management system 50 in the present embodiment includes a host 51 and interface apparatuses 52, 53, 54, and 55 that respectively adopt a thunderbolt interface and are serially connected in a daisy-chain manner. The functions of foregoing components will be respectively explained below.

The host 51 may be a desktop, a laptop, or a workstation. The host 51 includes a processor and various input/output interfaces for connecting peripheral devices and processing programs executed by a user. The host 51 further includes storage devices, such as a memory and a hard disk, for storing programs executed by the processor or other data. It should be noted that the host 51 further includes a controller 511 and an interface port 512, and the controller 511 provides data of a first channel and a second channel through the interface port 512. The controller 511 is a thunderbolt controller supporting dual-channel data transmission of thunderbolt interface, and which offers the dual-channel data transmission function through the interface port 512 (including data of peripheral component interconnect express (PCI-E) interface and/or DisplayPort (DP)).

The interface apparatuses 52, 53, 54, and 55 adopts the structure of the interface apparatus 34 described in foregoing embodiment, and each of the interface apparatuses 52, 53, 54, and 55 includes two interface ports, two controller, and one switch. The function of the interface apparatuses 52, 53, 54, and 55 has been explained in detail in foregoing embodiments therefore will not be described herein.

Herein it should be noted that the host 51 may act as a data flow analysis and management apparatus of the interface apparatuses 52, 53, 54, and 55. The controller 511 detects the types and number of the interface apparatuses 52, 53, 54, and 55 serially connected after the interface port 512 and issues a control signal according to the characteristics of the interface apparatuses 52, 53, 54, and 55 to control the switch thereof to switch the transmission paths of the data of the first channel and the second channel, so as to achieve a load balance of the data flow.

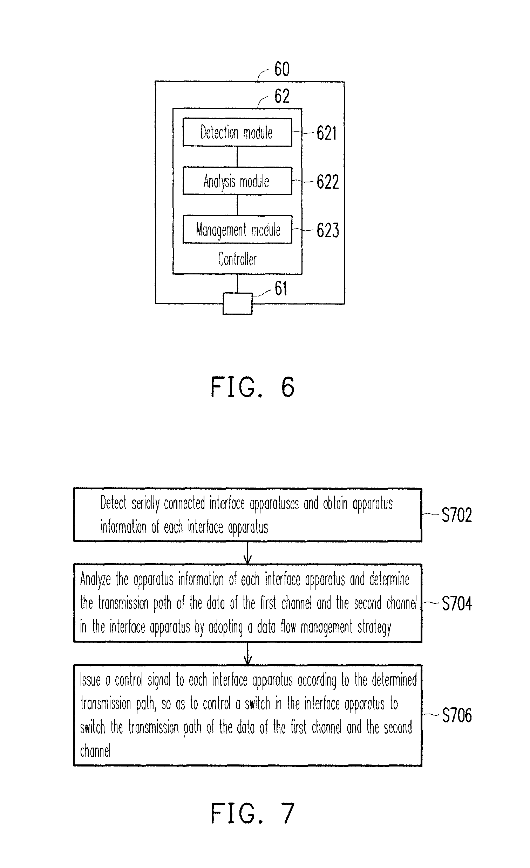

FIG. 6 is a block diagram of an apparatus for analyzing and managing data flow of interface apparatuses according to an embodiment of the invention. FIG. 7 is a flowchart of a method for analyzing and managing data flow of interface apparatuses according to an embodiment of the invention. Referring to FIG. 6 and FIG. 7, the data flow analysis and management apparatus 60 in the present embodiment includes an interface port 61 and a controller 62. The interface port 61 is configured to serially connect an interface apparatus (not shown). The controller 62 provides data of a first channel and a second channel. The controller 62 includes a detection module 621, an analysis module 622, and a management module 623. Below, the data flow analysis and management method in the present embodiment will be described in detail with reference to various components of the data flow analysis and management apparatus 60 in FIG. 6.

First, the detection module 621 detects the interface apparatuses serially connected after the data flow analysis and management apparatus 60 and obtains apparatus information of each interface apparatus (step S702). Herein the apparatus information includes the bandwidth requirement, data backup requirement, or a data processing sequence of each interface apparatus. However, the content of the apparatus information is not limited in the invention.

Then, the analysis module 622 analyzes the apparatus information of each interface apparatus and determines the transmission path of the data of the first channel and the second channel provided by the controller 62 in the interface apparatus by adopting a data flow management strategy (step S704). The data flow management strategy may be a load balancing strategy, a fault tolerance strategy, or a data flow optimization strategy regarding a specific interface apparatus. The data flow management strategy is not limited in the invention.

Next, the management module 623 issues a control signal to the interface apparatuses according to the transmission path determined by the analysis module 622 to control the switch thereof to switch the transmission path of the data of the first channel and the second channel (step S706).

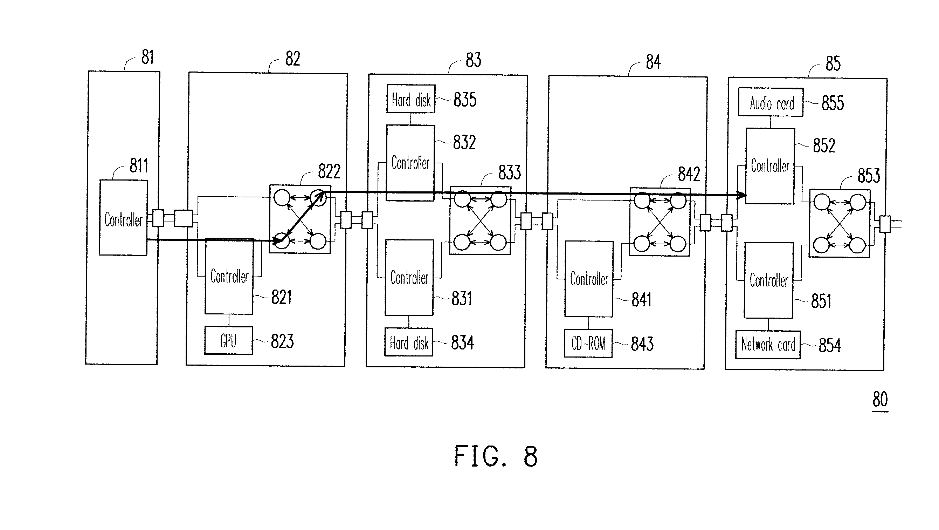

FIG. 8 illustrates an example of a system for analyzing and managing data flow of interface apparatuses according to an embodiment of the invention. Referring to FIG. 8, the data flow analysis and management system 80 in the present embodiment includes a data flow analysis and management apparatus 81 and interface apparatuses 82, 83, 84, and 85 that respectively adopt a thunderbolt interface and are serially connected in a daisy-chain manner. In the data flow analysis and management apparatus 81, a controller 811 provides data of a first channel and a second channel through the thunderbolt interface.

The interface apparatus 82 divides data of the first channel and the second channel to be transmitted on a first transmission path and a second transmission path. A controller 821 is disposed on the first transmission path so that a GPU 823 connected to the controller 821 can process data of the first channel. A switch 822 switches the data transmitted on the first transmission path and the second transmission path according to a control signal issued by the controller 811.

The interface apparatus 83 divides data of the first channel and the second channel to be transmitted on the first and the second transmission path. Controllers 831 and 832 are respectively disposed on the first and the second transmission path, so that data in a hard disk 834 connected to the controller 831 can be accessed by apparatuses of the first channel and data in a hard disk 835 connected to the controller 832 can be accessed by apparatuses of the second channel. A switch 833 switches the data transmitted on the first transmission path and the second transmission path according to a control signal issued by the controller 811.

The hard disks 834 and 835 are respectively served as two disks (for example, a RAID 0 and a RAID 1) in redundant arrays of inexpensive disks (RAID) and used for backing up important data in the data flow analysis and management apparatus 81. Herein the data flow analysis and management apparatus 81 transmits the backup data to the hard disks 834 and 835 respectively through the first channel and the second channel to store the backup data respectively into the hard disks 834 and 835. If a malfunction or error occurs in any one of the hard disks 834 and 835, the other one of the hard disks 834 and 835 still retains the backup data. Thus, a fault tolerance function is achieved.

The interface apparatus 84 divides data of the first channel and the second channel to be transmitted on the first transmission path and the second transmission path. A controller 841 is disposed on the first transmission path so that apparatuses of the first channel can perform read/write operations on a CD-ROM connected to the controller 841. A switch 842 switches the data transmitted on the first transmission path and the second transmission path according to a control signal issued by the controller 811.

The interface apparatus 85 divides data of the first channel and the second channel to be transmitted on the first and the second transmission path. Controllers 851 and 852 are respectively disposed on the first and the second transmission path, so that apparatuses of the first channel can connect to a local area network or the Internet to access network data through a network card 854 connected to the controller 851, and an audio card 855 connected to the controller 852 can perform audio processing on data of the second channel. A switch 853 switches data transmitted on the first transmission path and the second transmission path according to a control signal issued by the controller 811.

It should be noted that in the data flow analysis and management apparatus 81, when the interface apparatuses 82, 83, 84, and 85 are serially connected, the controller 811 obtains apparatus information of the interface apparatuses 82, 83, 84, and 85 through the first channel and the second channel and determines the transmission paths of the data of the first channel and the second channel in the interface apparatuses 82, 83, 84, and 85 according to the apparatus information. For example, the controller 811 determines that the data flows in the GPU 823 and the network card 854 are larger therefore require larger transmission bandwidths. Thus, the controller 811 separates the transmission paths of the GPU 823 and the network card 854 by using the load balancing strategy. Moreover, because the GPU 823 has the greatest demand to the transmission bandwidth, the controller 811 controls the switch 833 to switch the transmission path corresponding to the GPU 823 by using the data flow optimization strategy so as to avoid connecting to the CD-ROM 843. As indicated by the bold arrows in FIG. 8, the transmission path planned by the controller 811 regarding the GPU 823 includes only the GPU 823, the hard disk 834, and the audio card 855. Thus, the GPU 823 can obtain the greater transmission bandwidth and accordingly achieve the optimal transmission performance.

As described above, the invention provides an apparatus, a system, and a method for analyzing and managing data flow of interface apparatuses, in which the data transmission paths of two channels of a thunderbolt interface can be determined and switched by analyzing the characteristics of interface apparatuses serially connected to a host, so that a load balance of data flow, the fault tolerance, and the data flow optimization can be achieved.

It will be apparent to those skilled in the art that various modifications and variations can be made to the structure of the invention without departing from the scope or spirit of the invention. In view of the foregoing, it is intended that the invention cover modifications and variations of this invention provided they fall within the scope of the following claims and their equivalents.

## Claims

1. A system (50) for analyzing and managing data flow of interface apparatuses, comprising:
a host (51), having a first controller (511) and a first interface port (512), wherein the first controller (511) provides data of a first channel and a second channel through the first interface port (512); and
a plurality of interface apparatuses (52-55, 82-85), wherein each of the interface apparatuses (52-55, 82-85) comprises:
a second interface port (321), serially connected to the first interface port (512) for receiving the data of the first channel and the second channel and dividing the data of the first channel and the second channel to be transmitted on a first transmission path and a second transmission path;
a second controller (322), disposed on the first transmission path for processing the data transmitted on the first transmission path;
a switch (323), respectively connected to the first transmission path and the second transmission path for switching the data of the first channel and the second channel transmitted on the first transmission path and the second transmission path according to a control signal issued by the first controller (511); and
a third interface port (324), connected to the switch (323) for outputting the switched data of the first channel and the second channel.

2. The system for analyzing and managing data flow of interface apparatuses (52-55, 82-85) according to claim 1, wherein each of the interface apparatuses (52-55, 82-85) further comprises:
a third controller (343), disposed on the second transmission path for processing the data transmitted on the second transmission path.

3. The system for analyzing and managing data flow of interface apparatuses according to claim 1 or 2, wherein each of the interface apparatuses (52-55, 82-85) is further serially connected to the second interface port (321) of another interface apparatus (52-55, 82-85) by using the third interface port (324), so as to output the switched data of the first channel and the second channel to the another interface apparatus (52-55, 82-85) through the third interface port (324).

4. The system for analyzing and managing data flow of interface apparatuses according to claim 3, wherein the first controller (511) comprises:
a detection module (621), detecting the interface apparatuses (52-55, 82-85) serially connected after the first interface port (512) and obtaining an apparatus information of each of the interface apparatuses (52-55, 82-85);
an analysis module (622), analyzing the apparatus information of each of the interface apparatuses (52-55, 82-85), and determining a transmission path of the data of the first channel and the second channel in the interface apparatuses (52-55, 82-85) by using a data flow management strategy; and
a management module (623), transmitting the control signal to each of the interface apparatuses (52-55, 82-85) according to the determined transmission path, so as to control the switch (323) to switch the data of the first channel and the second channel transmitted on the first transmission path and the second transmission path.

5. The system for analyzing and managing data flow of interface apparatuses according to claim 4, wherein the data flow management strategy comprises a load balancing strategy, a fault tolerance strategy, or a data flow optimization strategy regarding a specific interface apparatus.

6. The system for analyzing and managing data flow of interface apparatuses according to claim 4, wherein the apparatus information comprises a bandwidth requirement, a data backup requirement, and a data processing sequence of each of the interface apparatuses (52-55, 82-85).

7. The system for analyzing and managing data flow of interface apparatuses according to any one of claims 1 to 6, wherein the first controller (511), the second controller (322), and the third controller (343) are thunderbolt controllers supporting dual-channel data transmission.

8. The system for analyzing and managing data flow of interface apparatuses according to any one of claims 1 to 7, wherein each of the interface apparatuses (52-55, 82-85) comprises a graphic processing apparatus, a display apparatus, an audio apparatus, a storage apparatus, a network connection apparatus, or a burning apparatus adopting a thunderbolt interface for transmitting data.

9. A method for analyzing and managing data flow of interface apparatuses, adapted to a host (51) and a plurality of interface apparatuses serially connected in a daisy-chain manner, wherein the host (51) provides data of a first channel and a second channel and switches a transmission path of the data of the first channel and the second channel in the interface apparatuses (52-55, 82-85), the method comprising:
detecting (S702) the serially connected interface apparatuses (52-55, 82-85) and obtaining an apparatus information of each of the interface apparatuses (52-55, 82-85);
analyzing (S704) the apparatus information of each of the interface apparatuses (52-55, 82-85) and determining the transmission path of the data of the first channel and the second channel in the interface apparatus by using a data flow management strategy; and
transmitting (S706) a control signal to each of the interface apparatuses (52-55, 82-85) according to the determined transmission path, so as to control a switch (323) in each of the interface apparatuses (52-55, 82-85) to switch the transmission path of the data of the first channel and the second channel.

10. The method for analyzing and managing data flow of interface apparatuses according to claim 9, wherein the data flow management strategy comprises a load balancing strategy, a fault tolerance strategy, or a data flow optimization strategy regarding a specific interface apparatus.

11. The method for analyzing and managing data flow of interface apparatuses according to claim 9 or 10, wherein the apparatus information comprises a bandwidth requirement, a data backup requirement, and a data processing sequence of each of the interface apparatuses (52-55, 82-85).

12. The method for analyzing and managing data flow of interface apparatuses according to any one of claims 9 to 11, wherein each of the interface apparatuses (52-55, 82-85) comprises a graphic processing apparatus, a display apparatus, an audio apparatus, a storage apparatus, a network connection apparatus, or a burning apparatus adopting a thunderbolt interface for transmitting data.

13. An apparatus (60, 81) for analyzing and managing data flow of interface apparatuses (52-55, 82-85), comprising:
an interface port (61), serially connected to a plurality of interface apparatuses (52-55, 82-85); and
a controller (62), coupled to the interface port (61), providing data of a first channel and a second channel through the interface port (61), the controller (62) comprising:
a detection module (621), detecting the serially connected interface apparatuses (52-55, 82-85) and obtaining an apparatus information of each of the interface apparatuses (52-55, 82-85);
an analysis module (622), analyzing the apparatus information of each of the interface apparatuses (52-55, 82-85), and determining the transmission path of the data of the first channel and the second channel in the interface apparatus by using a data flow management strategy; and
a management module, transmitting a control signal to each of the interface apparatuses (52-55, 82-85) according to the determined transmission path, so as to control the switch (323) to switch the transmission path of the data of the first channel and the second channel.

14. The apparatus for analyzing and managing data flow of interface apparatuses according to claim 13, wherein the data flow management strategy comprises a load balancing strategy, a fault tolerance strategy, or a data flow optimization strategy regarding a specific interface apparatus.

15. The apparatus for analyzing and managing data flow of interface apparatuses according to claim 13 or 14, wherein the apparatus information comprises a bandwidth requirement, a data backup requirement, and a data processing sequence of each of the interface apparatuses (52-55, 82-85).
